# EUROPÄISCHE PATENTSCHRIFT

(11) **EP 2 706 278 B1**
(45) Veröffentlichungstag und Bekanntmachung des Hinweises auf die Patenterteilung: **06.09.2017**
(21) Anmeldenummer: 13174676.0
(22) Anmeldetag: 02.07.2013
(51) Int. Cl.: F16L 33/22, F16L 33/207, F16L 37/12, F16L 37/091

(54) **Steckkupplung für ein Rohr, insbesondere für Wasserleitungen**
Plug-in coupling for a pipe, in particular for water pipes
Raccord enfichable pour un tuyau, notamment pour des conduites d'eau

(30) Priorität: 10.09.2012 AT 503722012
(43) Veröffentlichungstag der Anmeldung: 12.03.2014
(73) Patentinhaber: KE KELIT Kunststoffwerk Gesellschaft m.b.H., 4020 Linz (AT)
(72) Erfinder: Ratschmann, Elmar, 4201 Hellmonsödt (AT); Linzner, Werner, 4616 Weißkirchen (AT)
(74) Vertreter: Patentanwaltskanzlei Hübscher

(56) Entgegenhaltungen:
- EP-A1- 1 475 562
- JP-A- H03 265 787
- JP-A- 2006 336 712
- JP-U- H0 590 082

## Beschreibung

Die Erfindung bezieht sich auf eine Steckkupplung für ein Rohr, insbesondere einer Wasserleitung, mit einem das Rohrende aufnehmenden, rohrförmigen Kupplungsstück, mit einem Dichtungsring zwischen Kupplungsstück und Rohrende und mit einem axial verschiebbar gegenüber dem Kupplungsstück abgestützten Schutzring, der einen radial vorstehenden Mitnehmeranschlag für die Stirnseite des Rohrendes bildet und den am Kupplungsstück gelagerten Dichtungsring beim Einführen des Rohrendes in das Kupplungsstück gegenüber der Stirnseite des Rohrendes abdeckt

Es sind Rohranschlüsse bekannt, bei denen das anzuschließende Rohr auf einen Anschlussnippel aufgeschoben wird, der von einer Hülse umschlossen wird, sodass das Rohrende zum Aufschieben auf den Anschlussnippel in den Ringspalt zwischen dem Anschlussnippel und der mit dem Anschlussnippel zugfest verbundenen Hülse eingeführt werden muss. Die Dichtheit der Anschlussverbindung wird durch einen in einer Ringnut des Anschlussnippels gehaltenen Dichtungsring gewährleistet, über den das Rohrende geschoben werden muss. Dabei besteht die Gefahr, dass das auf den Anschlussnippel aufgesteckte Rohrende den Dichtungsring mit der Stirnseite beschädigt, insbesondere beim Einsatz metallischer Rohre. Um diese Beschädigungsgefahr zu bannen, ist es bekannt (EP 1 475 562 A1 und EP 1 219 883 A2) auf dem Anschlussnippel einen axial verschiebbaren Schutzring vorzusehen, der den Dichtungsring abdeckt und einen radial nach außen vorstehenden Mitnehmeransatz auf der in Steckrichtung hinteren Stirnseite aufweist, sodass beim Aufschieben des Rohrendes auf den Anschlussnippel die Stirnseite des Rohrendes entlang des Schutzrings über den Dichtungsring hinweggleitet, bis die Stirnseite des Rohrendes am Mitnehmeranschlag anschlägt. Der Schutzring wird daher vom Rohrende mitgenommen und in weiterer Folge vom Dichtungsring mit der Wirkung axial abgezogen, dass der Dichtungsring den Ringspalt zwischen dem Anschlussnippel und dem aufgeschobenen Rohrende abdichtet. Nachteilig ist allerdings, dass die notwendige Sicherheit zur Mitnahme des Schutzrings durch das Rohrende fehlt, wenn der Mitnehmeransatz durch die Stirnseite des Rohrendes gegen den Anschlussnippel hin ausgelenkt wird und demnach das Rohrende über den Schutzring hinweggleitet.

Die Gefahr einer Verletzung der Dichtung tritt auch bei Steckkupplungen auf, bei denen das Rohrende in eine Kupplungshülse eingesteckt wird, die einen Dichtungsring aufnimmt. Der Erfindung liegt somit die Aufgabe zugrunde, eine Steckkupplung mit einem Dichtungsring vorzugsweise zwischen einer äußeren Kupplungshülse und einem eingeschobenen Rohr so auszubilden, dass beim Einführen des Rohrendes in die Steckkupplung eine Beschädigungsgefahr für die Ringdichtung ausgeschlossen werden kann.

Ausgehend von einer Steckkupplung der eingangs geschilderten Art löst die Erfindung die gestellte Aufgabe dadurch, dass der Schutzring einen die Stirnseite des Rohrendes innen und außen umfassenden, im Querschnitt U-förmigen Mitnehmeranschlag aufweist.

Durch die Ausbildung des Mitnehmeranschlags mit einem U-förmigen Querschnitt wird sichergestellt, dass das Rohrende auf der dem Kupplungsstück abgewandten Außen- oder Innenseite vom Mitnehmeranschlag umgriffen wird, sodass der gewissermaßen in das Rohrende eingehängte Mitnehmeranschlag nicht mehr vom Rohrende gegen das Kupplungsstück ausgelenkt werden kann und sicher durch das Rohrende in axialer Richtung verlagert wird, um den Dichtungsring zur Anlage am Rohrende freizulegen. Dies gilt insbesondere für eine Ausführungsform, bei der das rohrförmige Kupplungsstück als das Rohrende umschließende Kupplungshülse mit einem innenliegenden Dichtungsring ausgebildet ist, weil in diesem Fall wegen des geringeren Verformungswiderstands beim Aufweiten des Schutzrings im Bereich des Mitnehmeranschlags eine größere Gefahr eines Auslenkens des Mitnehmeranschlags radial nach außen gegeben ist, wenn diesem Auslenken nicht durch das vorgeschlagene beidseitige Umfassen des Rohrendes von innen und von außen entgegengewirkt wird.

Da die Stirnseite des Rohrendes vom Schutzring beidseitig umfasst wird, wird es in vorteilhafter Weise möglich, den Schutzring dem Dichtungsring in Einsteckrichtung vorzulagern, sodass der Dichtungsring nicht mehr durch den Schutzring unter Vorspannung gehalten wird. Die fehlende Abstützung des dem Dichtungsring vorgelagerten Schutzrings durch den Dichtungsring spielt für die sichere Mitnahme des Schutzrings durch das eingeführte Rohrende keine Rolle, weil ja aufgrund der beidseitigen Umfassung der Stirnseite die Mitnahme des Schutzrings gesichert ist.

Um die Steckverbindung zwischen der Kupplungshülse und dem Rohrende zu sichern, ist es üblich, in der Kupplungshülse einen dem Dichtungsring in Einsteckrichtung des Rohrendes vorgelagerter Sperrring axial abzustützen, der radial vorstehende, in Einsteckrichtung geneigte Rückhalteklauen bildet. Diese Rückhalteklauen verkanten sich am Außenmantel des Rohrendes und verhindern ein Ausziehen des Rohrendes aus der Kupplungshülse. Mit einer axialen Rohrbelastung im Ausziehsinn werden die Rückhalteklauen mit einem Drehmoment entgegen ihrer Neigungsrichtung mit der Wirkung beaufschlagt, dass die Rückhalteklauen fester an das Rohrende angedrückt werden. Voraussetzung ist allerdings, dass sich die Rückhalteklauen beim Einführen des Rohrendes in die Kupplungshülse mit einer federnden Vorspannung an das Rohrende anlegen. Um den dadurch bedingten Einführwiderstand zu verringern, kann der Schutzring vor dem Einstecken des Rohrendes in die Kupplungshülse zumindest den Sperrring abdecken. Es ist aber auch möglich, sowohl den Sperrring als auch den Dichtungsring mit dem Schutzring abzudecken. In beiden Fällen kann die mit dem Schutzring abgedeckte Stirnseite des Rohrendes sowohl über die Rückhalteklauen des Sperrrings als auch über den Dichtungsring gleiten.

In der Zeichnung ist der Erfindungsgegenstand beispielsweise dargestellt. Es zeigen
- Fig. 1: eine erfindungsgemäße Steckkupplung in einem vereinfachten, schematischen Längsschnitt vor dem Einstecken des zu kuppelnden Rohrs,
- Fig. 2: eine der Fig. 1 entsprechende Darstellung der erfindungsgemäßen Steckkupplung, jedoch mit eingestecktem Rohrende und die
- Fig. 3: und 4 eine den Fig. 1 und 2 entsprechende Darstellung einer Ausführungsvariante einer erfindungsgemäßen Steckkupplung.

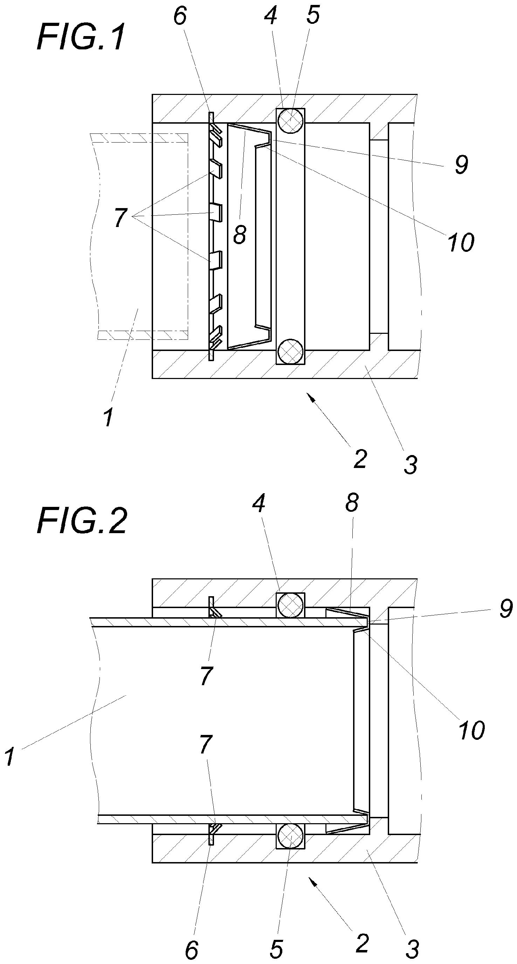

Gemäß dem Ausführungsbeispiel nach den Fig. 1 und 2 umfasst die Steckkupplung eine das Rohrende 1 eines anzuschließenden Rohrs aufnehmendes, rohrförmiges Kupplungsstück 2, das im gewählten Ausführungsbeispiel als das Rohrende 1 umschließende Kupplungshülse 3 ausgebildet ist, die mit einem inneren, in eine Aufnahmenut 4 eingesetzten Dichtungsring 5 versehen ist, der das in die Kupplungshülse 3 eingeführte Rohrende 1 flüssigkeitsdicht mit der Kupplungshülse 3 verbindet, wie dies in der Fig. 2 dargestellt ist. Das üblicherweise bis zu einem stirnseitigen Anschlag in die Kupplungshülse 3 eingesteckte Rohrende 1 wird mit Hilfe eines gegenüber der Kupplungshülse 3 axial abgestützten Sperrrings 6 festgehalten, der mit in Einsteckrichtung geneigt verlaufenden, sich an der Rohrwandung abstützenden Rückhalteklauen 7 ein Ausziehen des Rohrs aus der Kupplungshülse 3 verhindert. Die scharfkantigen Rückhalteklauen 7 verkrallen sich nämlich in der Oberfläche des Rohrendes 1 bei einer Rohrbelastung im Ausziehsinn, wobei mit einer zunehmenden Ausziehkraft die Rückhalteklauen 7 zunehmend mit einem Biegemoment entgegen der Klauenneigung beaufschlagt werden, was zu einer zunehmenden Verkrallung zwischen dem Sperrring 6 und dem Rohrende 1 führt.

Da insbesondere auf Baustellen nicht damit gerechnet werden kann, dass die Rohrenden 1 stirnseitig entsprechend bearbeitet werden, um über den Dichtungsring 5 hinweg in die Kupplungshülse 3 eingeschoben zu werden, ohne den Dichtungsring 5 zu beschädigen, wird der Dichtungsring 5 in der Kupplungshülse 3 gegenüber dem eingeschobenen Rohrende 1 durch einen Schutzring 8 abgedeckt. Dieser Schutzring 8 kann vor dem Einführen des Rohrendes 1 in die Kupplungshülse 3 dem Dichtungsring 5 abdecken. Vorteilhafter ist es allerdings, wenn der Schutzring 8 dem Dichtungsring 5 in Einsteckrichtung des Rohrendes 1 vorgelagert ist, weil dann der Dichtungsring 5 vor dem Einführen des Rohrendes 1 nicht unter einer Vorspannung durch den Schutzring 8 gehalten wird. Der Schutzring 8 muss nach der Aufnahme der Stirnseite des Rohrendes 1 vom Rohrende 1 mitgenommen werden. Zu diesem Zweck ist der Schutzring 8 mit einem radial nach innen vorstehenden Mitnehmeranschlag 9 für die Stirnseite des Rohrendes 1 versehen. Der Mitnehmeranschlag 9 weist dabei einen die Stirnseite des Rohrendes 1 innen und außen umfassenden, U-förmigen Querschnitt auf, sodass beim Einführen des Rohrendes 1 in die Kupplungshülse 3 der die Stirnseite des Rohrendes 1 auf der der Kupplungshülse 3 abgekehrten Innenseite umgreifende Steg 10 des Mitnehmeranschlags 9 ein Abgleiten des Schutzrings 8 von der Stirnseite des Rohrendes 1 wirksam verhindert und sicherstellt, dass der Schutzring 8 vom Dichtungsring 5 abgezogen wird und der Dichtungsring 5 den Ringspalt zwischen der Kupplungshülse 3 und dem Rohrende 1 unmittelbar abdichtet, wie dies die Fig. 2 zeigt.

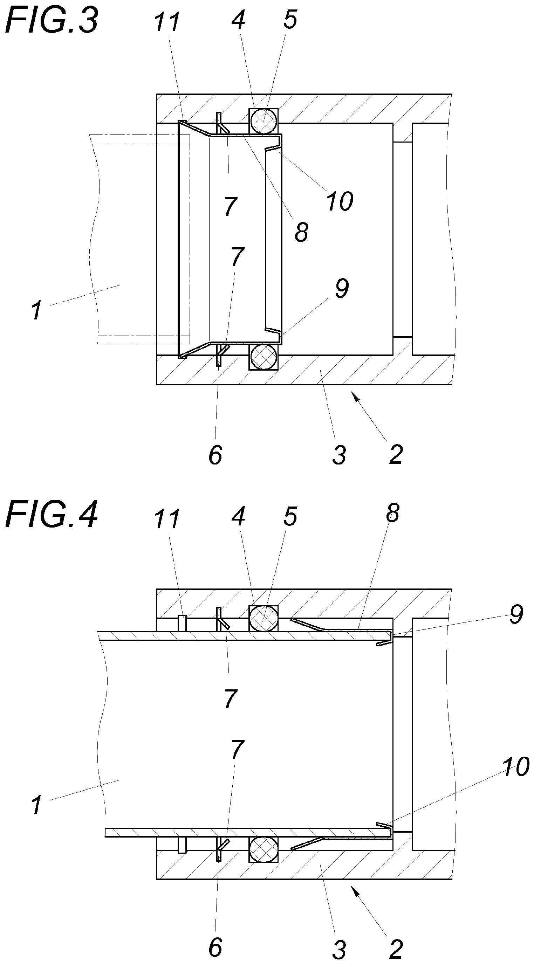

Die Ausführungsform einer erfindungsgemäßen Steckkupplung nach den Fig. 3 und 4 unterscheidet sich von der nach den Fig. 1 und 2 im Wesentlichen nur dadurch, dass der Schutzring 8 den Sperrring 6 übergreift, und nicht nur den Sperrring 6, sondern auch den Dichtungsring 5 zum Einführen des Rohrendes 1 in die Kupplungshülse 3 abdeckt, was die Handhabung der Steckkupplung beim Einstecken des Rohrendes 1 in die Kupplungshülse 3 erleichtert.

Der Schutzring 8 kann sich innerhalb der Kupplungshülse 3 unter einer federnden Vorspannung an der Innenwand der Kupplungshülse 3 abstützen und demnach rein kraftschlüssig in axialer Richtung festgelegt werden, wie dies in der Fig. 1 angedeutet ist. Wird jedoch gemäß der Fig. 3 eine Verrastung in einer Rastnut 11 vorgesehen, so kann die axiale Lage des Schutzrings 8 gegenüber der Kupplungshülse 3 konstruktiv festgelegt werden.

Die Erfindung ist selbstverständlich nicht auf die dargestellten Ausführungsbeispiele beschränkt.

## Patentansprüche

1. Steckkupplung für ein Rohr, insbesondere einer Wasserleitung, mit einem ein Rohrende (1) aufweisenden Rohr, mit einem das Rohrende (1) aufnehmenden, rohrförmigen Kupplungsstück (2), mit einem den Ringspalt zwischen Kupplungsstück (2) und Rohrende (1) unmittelbar abdichtenden Dichtungsring (5) und mit einem axial verschiebbar gegenüber dem Kupplungsstück (2) abgestützten Schutzring (8), der einen radial vorstehenden Mitnehmeranschlag (9) für die Stirnseite des Rohrendes (1) bildet und den am Kupplungsstück (2) gelagerten Dichtungsring (5) beim Einführen des Rohrendes (1) in das Kupplungsstück (2) gegenüber der Stirnseite des Rohrendes (1) abdeckt, **dadurch gekennzeichnet, dass** der Schutzring (8) einen die Stirnseite des Rohrendes (1) innen und außen umfassenden, im Querschnitt U-förmigen Mitnehmeranschlag (9) aufweist.

2. Steckkupplung nach Anspruch 1, **dadurch gekennzeichnet, dass** das rohrförmige Kupplungsstück (2) als das Rohrende (1) umschließende Kupplungshülse (3) mit einem innenliegenden Dichtungsring (5) ausgebildet ist.

3. Steckkupplung nach Anspruch 2, **dadurch gekennzeichnet, dass** der Schutzring (8) vor dem Einstecken des Rohrendes (1) in die Kupplungshülse (3) dem Dichtungsring (5) in Einsteckrichtung vorgelagert ist.

4. Steckkupplung nach Anspruch 2 oder 3, **dadurch gekennzeichnet, dass** in der Kupplungshülse (3) ein dem Dichtungsring (5) in Einsteckrichtung des Rohrendes (1) vorgelagerter Sperrring (6) axial abgestützt ist, der radial vorstehende, in Einsteckrichtung geneigte Rückhalteklauen (7) bildet, und dass der Schutzring (8) vor dem Einstecken des Rohrendes (1) in die Kupplungshülse (3) zumindest den Sperrring (6) abdeckt.

## Claims

1. Plug-in coupling for a pipe, in particular a water conduit, having a pipe comprising a pipe end (1), having a tubular coupling piece (2) receiving the pipe end (1), having a sealing ring (5) directly sealing the annular gap between the coupling piece (2) and the pipe end (1), and having a protective ring (8) supported in an axially displaceable manner with respect to the coupling piece (2) and forming a radially protruding entrainment stop (9) for the end face of the pipe end (1) and covering the sealing ring (5) mounted on the coupling piece (2) during introduction of the pipe end (1) into the coupling piece (2) with respect to the end face of the pipe end (1), **characterised in that** the protective ring (8) comprises an entrainment stop (9) which has a U-shaped cross-section and enfolds the end face of the pipe end (1) internally and externally.

2. Plug-in coupling as claimed in claim 1, **characterised in that** the tubular coupling piece (2) is formed as a coupling sleeve (3) enclosing the pipe end (1) and having an internal sealing ring (5).

3. Plug-in coupling as claimed in claim 2, **characterised in that** the protective ring (8) is located upstream of the sealing ring (5) in the insertion direction prior to insertion of the pipe end (1) into the coupling sleeve (3).

4. Plug-in coupling as claimed in claim 2 or 3, **characterised in that**, in the coupling sleeve (3), a blocking ring (6) located upstream of the sealing ring (5) in the insertion direction of the pipe end (1) is supported in the axial direction and forms radially protruding retaining claws (7) inclined in the insertion direction, and that the protective ring (8) covers at least the blocking ring (6) prior to insertion of the pipe end (1) into the coupling sleeve (3).

## Revendications

1. Raccord enfichable pour un tuyau, en particulier une conduite d'eau, avec un tuyau présentant une extrémité de tuyau (1), avec une pièce d'accouplement (2) en forme de tuyau, recevant l'extrémité de tuyau (1), avec une bague d'étanchéité (5) étanchant directement la fente annulaire entre la pièce d'accouplement (2) et l'extrémité de tuyau (1), et avec une bague de protection (8) en appui, mobile axialement par rapport à la pièce d'accouplement (2) qui forme une butée d'entrainement (9) faisant saillie radialement pour le coté frontal de l'extrémité de tuyau (1) et recouvre la bague d'étanchéité (5) placée au niveau de la pièce d'accouplement (2) lors de l'introduction de l'extrémité de tuyau (1) dans la pièce d'accouplement (2) vis à vis du côté frontal de l'extrémité de tuyau (1), **caractérisé en ce que** la bague de protection (8) présente une butée d'entrainement (9), en forme de U en section transversale, enveloppant intérieurement et extérieurement le côté frontal de l'extrémité de tuyau (1).

2. Raccord enfichable selon la revendication 1, **caractérisé en ce que** la pièce d'accouplement (2) en forme de tuyau est réalisée en tant que douille d'accouplement (3) entourant l'extrémité de tuyau (1), avec une bague d'étanchéité (5) à l'intérieur.

3. Raccord enfichable selon la revendication 2, **caractérisé en ce que** la bague de protection (8) est placée, avant l'insertion de l'extrémité de tuyau (1) dans la douille d'accouplement (3), en amont de la bague d'étanchéité (5) dans le sens d'insertion.

4. Raccord enfichable selon la revendication 2 ou 3, **caractérisé en ce que** dans la douille d'accouplement (3), est appuyée axialement une bague de blocage (6) montée en amont de la bague d'étanchéité (4) dans le sens d'introduction de l'extrémité de tuyau (1) qui forme des griffes de retenue (7) dépassant radialement et inclinées dans le sens d'insertion, et **en ce que** la bague de protection (8) recouvre au moins la bague de blocage (6) avant l'introduction de l'extrémité de tuyau (1) dans la douille d'accouplement (3).
